# EUROPÄISCHE PATENTANMELDUNG

(11) **EP 4 467 826 A1**
(43) Veröffentlichungstag der Anmeldung: **27.11.2024**
(21) Anmeldenummer: 24173708.9
(22) Anmeldetag: 02.05.2024
(51) Int. Cl.: F16B 45/00, F16B 35/06, F16B 25/00

(54) **HAKENSCHRAUBE UND VERFAHREN ZUR HERSTELLUNG EINER HAKENSCHRAUBE**

(30) Priorität: 26.05.2023 DE 102023113868
(71) Anmelder: fischerwerke GmbH & Co. KG, 72178 Waldachtal (DE)
(72) Erfinder: Dixa, Raphael, 72178 Waldachtal (DE)
(74) Vertreter: Suchy, Ulrich Johannes

(57) **Zusammenfassung**

Die Erfindung betrifft ein Verfahren zum Herstellen einer Hakenschraube (1) sowie eine Hakenschraube (1) mit einem als Haken ausgeformten Kopfabschnitt (2) und einem Schaftabschnitt (3), der an einer Biegestelle (7) in den Kopfabschnitt (2) übergeht. Der Kopfabschnitt (2) weist einen Aufnahmeabschnitt (8) mit einer Werkzeugaufnahme (10) für ein Drehwerkzeug auf. Zwischen dem Aufnahmeabschnitt (8) und dem Schaftabschnitt (3) ist ein erster gebogener Hakenabschnitt (11) angeordnet, der einen im Wesentlichen kreisrunden Querschnitt mit einem ersten Durchmesser (12) aufweist. Kennzeichnend für die erfindungsgemäße Hakenschraube (1) ist, dass der Aufnahmeabschnitt (8) in einem Querschnitt eine sich senkrecht zur Längsachse (4) erstreckende Breite (13) aufweist, die größer als der erste Durchmesser (12) ist und eine sich in Richtung der Längsachse (4) erstreckende Tiefe (14), die kleiner als der erste Durchmesser (12) ist.

## Beschreibung

Die Erfindung betrifft eine Hakenschraube mit den Merkmalen des Oberbegriffs des Anspruchs 1 und ein Verfahren zur Herstellung einer Hakenschraube mit den Merkmalen des Oberbegriffs des Anspruchs 12.

Aus der US-Patentschrift 5,207,404 ist eine gattungsgemäße Hakenschraube bekannt, die als offener Rundhaken ausgebildet ist. Ein Schaftabschnitt dieser bekannten Hakenschraube erstreckt sich gerade entlang einer Längsachse und weist ein Holzschraubengewinde auf. An einem sich an den Schaftabschnitt anschließenden Kopfabschnitt ist eine Werkzeugaufnahme ausgebildet, an der ein Drehwerkzeug, beispielsweise ein Schraubendreher, angesetzt werden kann, um die Hakenschraube in einen Gegenstand einzuschrauben, beispielsweise in einen Holzbalken.

Aufgabe der Erfindung ist, eine alternative Hakenschraube mit einer Werkzeugaufnahme zu schaffen, die einfach zu handhaben und kostengünstig herstellbar ist.

Diese Aufgabe wird erfindungsgemäß durch eine Hakenschraube mit den Merkmalen des Anspruchs 1 sowie durch ein Verfahren gemäß Anspruch 12 gelöst. Die abhängigen Ansprüche haben vorteilhafte Ausgestaltungen und Weiterbildungen der Erfindung zum Gegenstand.

Die erfindungsgemäße Hakenschraube weist einen als Haken ausgeformten Kopfabschnitt und einen Schaftabschnitt auf. Der Schaftabschnitt ist gerade und erstreckt sich entlang einer Längsachse. An seinem vorderen Ende weist der Schaftabschnitt ein Außengewinde zum Einschrauben in einen Gegenstand auf. Das "vordere Ende" bezeichnet hier nicht nur die vorderste Spitze des Schaftabschnitts, sondern einen vorderen Bereich bzw. Abschnitt. Abhängig vom Gegenstand, in den die Hakenschraube eingeschraubt werden soll, kann das Außengewinde entsprechend gestaltet sein, beispielsweise als Holz- oder Spanplattenschraubengewinde, als Betonschraubengewinde oder als metrisches Gewinde, so dass die Hakenschrauben in einen Gegenstand aus Holz, in ein Bohrloch in Beton oder in ein vorgefertigtes Innengewinde, beispielsweise in einer Metallplatte, eingeschraubt werden kann.

Der gerade ausgebildete Schaftabschnitt geht an einer Biegestelle in den Kopfabschnitt über. Die Biegestelle kennzeichnet somit den Übergang vom Schaftabschnitt zum Kopfabschnitt, was auch bedeutet, dass der Kopfabschnitt sich nicht als gerader Abschnitt entlang der Längsachse an den Schaftabschnitt anschließt, sondern ab der Biegestelle von der Längsachse abweicht.

Der Kopfabschnitt weist einen Aufnahmeabschnitt auf, in dem eine Werkzeugaufnahme für ein Drehwerkzeug ausgebildet ist. Die Werkzeugaufnahme ist eine Ausnehmung und liegt im Aufnahmeabschnitt und ist insbesondere durch Umformen in diesen eingepresst oder eingeprägt worden. In der Werkzeugaufnahme kann ein Drehwerkzeug, beispielsweise ein Schraubendreher oder der Bit eines Schraubers, angesetzt werden, um die Hakenschraube in den Gegenstand einzudrehen. Bei der Werkzeugaufnahme kann es sich beispielsweise um einen Innenmehrkant, einen Schlitz oder einen Kreuzschlitz handeln, wobei diese Aufzählung beispielhaft und nicht abschließend ist.

Erfindungsgemäß weist der Aufnahmeabschnitt in einem Querschnitt, in dem die Werkzeugaufnahme angeordnet ist, eine sich senkrecht zur Längsachse erstreckende Breite auf, die größer ist als eine sich in Richtung der Längsachse erstreckende Tiefe des Querschnitts des Aufnahmeabschnitts. Die Tiefe und die Breite des Querschnitts verlaufen orthogonal zueinander in einer Querschnittsebene, zu der die Mittellinie durch die Querschnitte des Aufnahmeabschnitts eine Flächennormale bildet. Die Breite erstreckt sich insbesondere normal zu einer ersten Axialebene. Damit wird erreicht, dass der Aufnahmeabschnitt in Umfangsrichtung um die in ihrem Umfang geschlossene Werkzeugaufnahme eine relativ große Wandstärke aufweist, wodurch die Werkzeugaufnahme stabil ausgebildet ist, so dass sie auch relativ große Drehmomente aufnehmen kann. In der ersten Axialebene liegt die Längsachse. Diese ist senkrecht zum Aufnahmequerschnitt angeordnet und verläuft insbesondere mittig, bezogen auf die Breite des Aufnahmequerschnitts, durch den Aufnahmequerschnitt und den Schaftabschnitt.

Insbesondere liegt die Werkzeugaufnahme im Bereich des Querschnitts, dessen Breite am größten ist. Insbesondere liegt die Werkzeugaufnahme in dem Bereich des Aufnahmeabschnitts, dessen Querschnitt flächenmäßig am größten ist.

Der Aufnahmeabschnitt verläuft insbesondere in der ersten Axialebene. Damit ist gemeint, dass eine Mittellinie durch die Querschnitte des Aufnahmeabschnitts in der ersten Axialebene liegt. In dieser ersten Axialebene liegt insbesondere auch die Längsachse.

Insbesondere ist zwischen dem Aufnahmeabschnitt, der die Werkzeugaufnahme aufweist, und dem Schaftabschnitt, der sich bis zur ersten Biegestelle entlang der Längsachse erstreckt, ein erster Hakenabschnitt angeordnet, der von der Längsachse weg gebogen ist und der in den Aufnahmeabschnitt übergeht. Der erste Hakenabschnitt bildet einen Teil des Kopfabschnitts, und zwar den Teil, mit dem der Kopfabschnitt am Schaftabschnitt anliegt. An der ersten Biegestelle ist der Hakenabschnitt von der Längsachse weg gebogen. Im Hakenabschnitt oder am Übergang zum Aufnahmeabschnitt ist eine zweite Biegestelle vorhanden, an der eine Biegung in entgegengesetzter Richtung hin zur Längsachse erfolgt, so dass die Längsachse der Aufnahmeabschnitt schneidet, insbesondere derart, dass eine Mittellinie des Aufnahmeabschnitts die Längsachse orthogonal schneidet.

Vorzugsweise weist der erste Hakenabschnitt einen im Wesentlichen kreisrunden Querschnitt mit einem ersten Durchmesser auf, der insbesondere zwischen der Biegestelle und dem Aufnahmeabschnitt im Wesentlichen konstant ist. Der erste Durchmesser ist insbesondere gleich dem Durchmesser des Ausgangsstücks des Drahts aus dem die Hakenschraube hergestellt ist. Auch der erste Hakenabschnitt verläuft insbesondere in der ersten Axialebene.

Der sich an den Hakenabschnitt angrenzende Aufnahmeabschnitt beginnt dort, wo die Breite größer als der erste Durchmesser und die Tiefe kleiner als der erste Durchmesser des Hakenabschnitt sind. Im Aufnahmeabschnitt selbst kann der Querschnitt variieren, sich also in Breite und Tiefe entlang der Mittellinie ändern.

Vorzugsweise weist der Aufnahmeabschnitt eine Länge auf, die größer als seine Breite ist. Die Länge wird dabei in die Richtung gemessen, die orthogonal zur Breite und zur Tiefe verläuft. Insbesondere verläuft die Länge geradlinig in der ersten Axialebene.

Weiterhin ist bevorzugt, dass der Aufnahmeabschnitt eine ebene Aufnahmefläche aufweist, die auf einer dem Schaftabschnitt abgewandten Seite des Aufnahmeabschnitts ausgebildet ist. Insbesondere verläuft die erste Axialebene senkrecht zur Aufnahmefläche. In dieser Aufnahmefläche ist vorzugsweise die Werkzeugaufnahme angeordnet.

Bei einer bevorzugten Ausgestaltungsform der erfindungsgemäßen Hakenschraube ist die Werkzeugaufnahme konzentrisch zur Längsachse. Das heißt, dass eine mittig in der Werkzeugaufnahme verlaufende Aufnahmeachse parallel zur oder auf der Längsachse verläuft. Vorzugsweise ist die Werkzeugaufnahme drehsymmetrisch zur Längsachse. Weiterhin ist bevorzugt, dass die Werkzeugaufnahme den Aufnahmeabschnitt in der Tiefe, also parallel oder in Richtung zur Längsachse, vollständig durchdringt, wodurch ein möglichst tiefer und somit fester Sitz des Drehwerkzeugs in der Werkzeugaufnahme ermöglicht wird.

Vorzugsweise weist die Werkzeugaufnahme eine Nut auf, die sich radial zu der mittig in der Werkzeugaufnahme liegenden Aufnahmeachse nach außen unter einem Winkel zur Breite erstreckt, insbesondere derart, dass ein Umkreis um die Nut, bei dem die Aufnahmeachse das Zentrum bildet, einen geringeren Abstand zu einem äußeren Rand des Aufnahmeabschnitts aufweist als ein der Aufnahmeachse abgewandtes Ende der Nut. Insbesondere verläuft somit die Nut nicht orthogonal zur ersten Axialebene. Durch die Drehung der Nut der Werkzeugaufnahme um einen Winkel zur Richtung der Breite wird erreicht, dass die Wanddicke in Richtung der Breite relativ groß ist, wodurch die Werkzeugaufnahme in sich stabil ausgebildet werden kann, so dass sie auch hohe Drehmomente vom Drehwerkzeug aufnehmen kann.

Bei einer bevorzugten Ausgestaltungsform der erfindungsgemäßen Hakenschraube weist der Aufnahmeabschnitt eine dem Schaftabschnitt zugewandte Innenseite auf, die eine Innenebene bildet, zu der die Längsachse eine Flächennormale bildet. Die Ausbildung dieser Innenebene erleichtert das Ausbilden der Werkzeugaufnahme, da der Aufnahmeabschnitt bei dem Einbringen der Werkzeugaufnahme im Bereich der Innenebene auf einfache Weise gehalten werden kann.

Weiterhin ist bevorzugt, dass sich an den Aufnahmeabschnitt, an seinem dem ersten Hakenabschnitt abgewandten Ende, ein zweiter Hakenabschnitt anschließt, der in die gleiche Richtung gekrümmt ist, insbesondere die gleiche Krümmung aufweist, wie der erste Hakenabschnitt. Der zweite Hakenabschnitt weist, wie der erste Hakenabschnitt, bis zu seinem freien Ende einen im Wesentlichen kreisrunden Querschnitt auf.

Der Abstand eines freien Endes des zweiten Hakenabschnitts zum Schaftabschnitt kann größer als der erste Durchmesser des ersten Hakenabschnitts sein, so dass ein offener Rundhaken gebildet wird. Alternativ ist der Abstand des freien Endes des zweiten Hakenabschnitts zum Schaftabschnitt kleiner als der erste Durchmesser des ersten Hakenabschnitts, so dass ein Ösenhaken gebildet wird.

Das erfindungsgemäße Verfahren dient zum Herstellen einer Hakenschraube, die einen Schaftabschnitt mit einem Außengewinde und einen als Haken ausgeformten Kopfabschnitt umfasst. Der Kopfabschnitt einer nach diesem Verfahren hergestellten Hakenschraube weist einen Werkzeugaufnahme auf, die in einem Querschnitt eines Aufnahmeabschnitts angeordnet ist, dessen Breite größer als dessen Tiefe ist. Erfindungsgemäß wird die Hakenschraube durch Umformen aus einem Ausgangsstücks hergestellt, dessen Ausgangsbreite in einem Querschnitt, in dem bei der Herstellung die Werkzeugaufnahme angeordnet wird, vor dem Umformen kleiner ist als die Breite des Querschnitts nach dem Umformen, bei dem der Aufnahmeabschnitt geformt wird.

Insbesondere dient das erfindungsgemäße Verfahren zum Herstellen einer oben beschriebenen Hakenschraube.

Vorzugsweise weist das Ausgangsstück in dem Bereich, in dem die Werkezugaufnahme angeordnet wird, vor dem Umformen eine Ausgangstiefe auf, die größer ist als die Tiefe des Querschnitts nach dem Umformen. Beim Umformen wird Material von der Richtung der Tiefe nach außen in Richtung der Breite verdrängt, wodurch der Aufnahmeabschnitt entsteht.

Das Ausgangsstück kann eine beliebige Form aufweisen. Vorzugsweise ist das Ausgangsstück ein Draht oder aus einem Draht hergestellt, mit einer zylindrischen Form und/oder einem runden Querschnitt, so dass die Ausgangsbreite und die Ausgangstiefe gleich wie der Drahtdurchmesser in dem Querschnitt sind, in dem der Aufnahmeabschnitt geformt wird. Der Drahtdurchmesser entspricht insbesondere dem ersten Durchmesser des ersten Hakenabschnitts oder ist größer als dieser. Mit "Draht" ist insbesondere ein Stahldraht gemeint, wie er typischerweise zum Herstellen von Schrauben verwendet wird.

Insbesondere ist das Umformen ein Kaltmassivumformen. Durch das Kaltumformen des Drahts kommt es im Bereich des Aufnahmeabschnitts zu einer Verfestigung, wodurch der Bereich, in dem die Werkzeugaufnahme ausgebildet wird, verfestigt ist, was eine besonders stabile Ausbildung der Werkzeugaufnahme ermöglicht.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand eines in der Zeichnung dargestellten Ausführungsbeispiels näher beschrieben.

Es zeigen:
- Figur 1: eine erfindungsgemäße Hakenschraube in einer perspektivischen Ansicht mit Blick auf ein hinteres Ende der Hakenschraube;
- Figur 2: die erfindungsgemäße Hakenschraube in einer perspektivischen Ansicht mit Blick von vorne;
- Figur 3: eine Vorderansicht der erfindungsgemäßen Hakenschraube;
- Figur 4: eine Rückansicht der erfindungsgemäßen Hakenschraube;
- Figur 5: eine Seitenansicht der erfindungsgemäßen Hakenschraube;
- Figur 6: einen Axialschnitt durch die erfindungsgemäße Hakenschraube in einer ersten Axialebene;
- Figur 7: eine Schnittdarstellung gemäß den Pfeilen VII der Figur 5;
- Figur 8: Eine Schnittdarstellung gemäß den Pfeilen VIII der Figur 5 in einer zweiten Axialebene;
- Figuren 9 und 10: Querschnitte des Aufnahmeabschnitts während der Herstellung

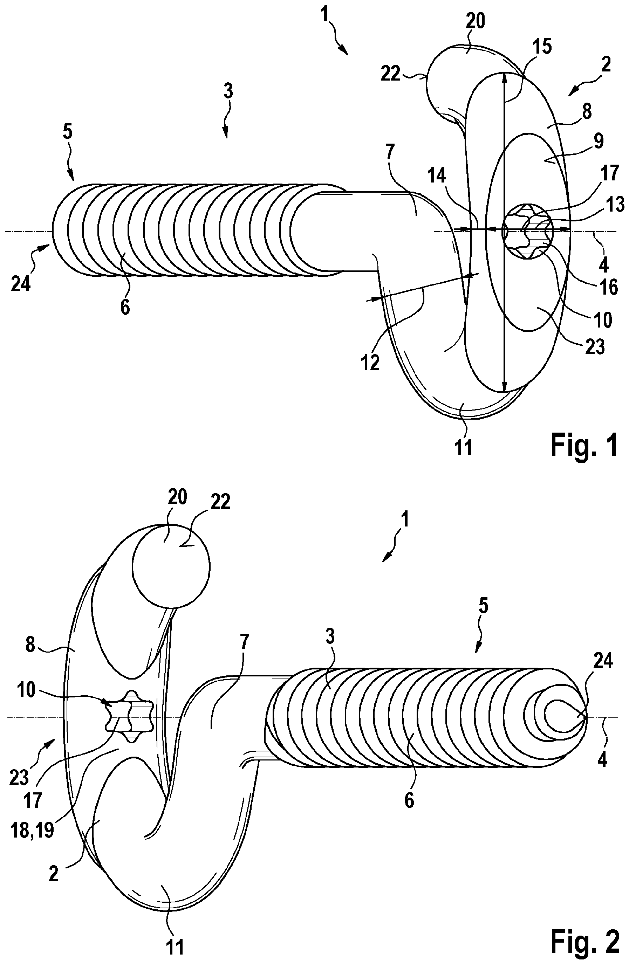

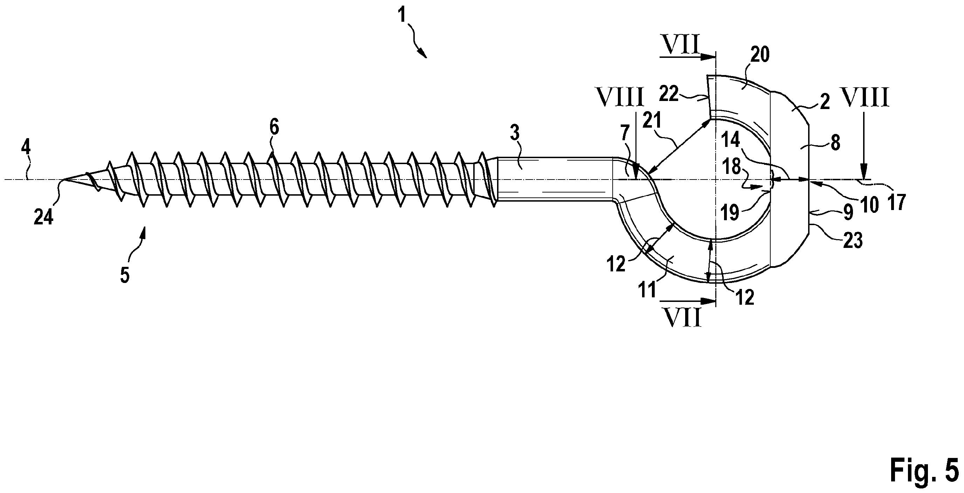

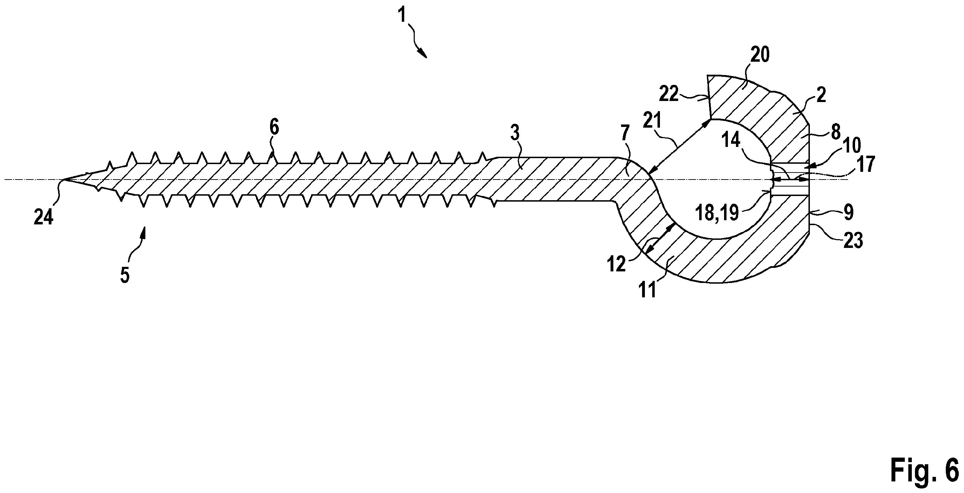

In den Figuren 1 bis 8 ist eine erfindungsgemäße Hakenschraube 1 dargestellt, die aus einem Draht aus Stahl durch Kaltumformen hergestellt worden ist. Die Hakenschraube 1 umfasst einen Schaftabschnitt 3 und einen als offener Rundhaken ausgebildeten Kopfabschnitt 2. Der Schaftabschnitt 3 ist gerade und erstreckt sich entlang einer Längsachse 4. An seinem vorderen Ende 5 weist der Schaftabschnitt 3 ein umlaufendes Außengewinde 6 auf, hier in Form eines Holzschraubengewindes, das sich über ca. 80 % des Schaftabschnitts 3, ausgehend von einer vorderen Spitze 24 der Hakenschraube 1, hin zu einem hinteren Ende 23 der Hakenschraube 1 erstreckt. Der Schaftabschnitt 3 erstreckt sich gerade und konzentrisch zur Längsachse 4 bis zu einer Biegestelle 7, in welcher der Draht von der Längsachse 4 weg gebogen ist, und die den Übergang vom Schaftabschnitt 3 in den Kopfabschnitt 2 charakterisiert.

An der Biegestelle 7 geht der Schaftabschnitt 3 in einen ersten gebogenen Hakenabschnitt 11 des Kopfabschnitts 2 über, der in einer ersten Axialebene 25 verläuft, in der auch die Längsachse 4 liegt. Dieser erste Hakenabschnitt 11 weist einen im Wesentlichen kreisrunden und gleichbleibenden Querschnitt mit einem ersten Durchmesser 12 auf, der im vorliegenden Fall dem Durchmesser des Drahts entspricht, aus dem die Hakenschraube 1 hergestellt wurde.

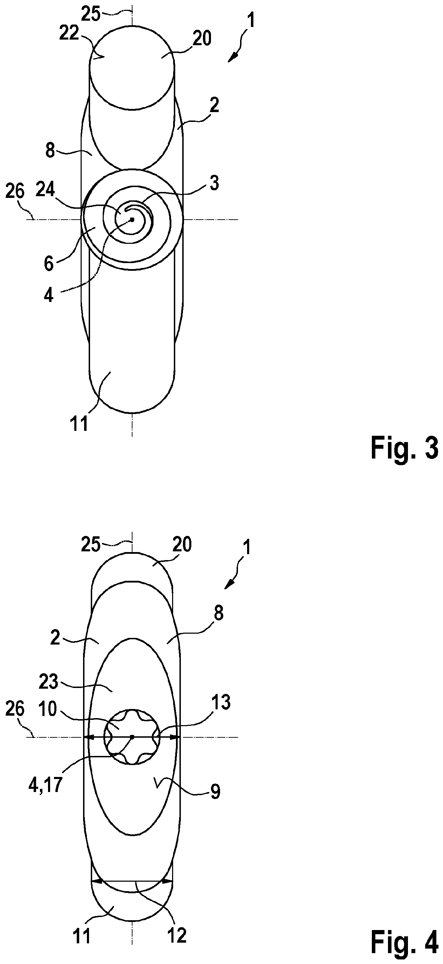

An den ersten gebogenen Hakenabschnitt 11 schließt sich auf der der Biegestelle 7 abgewandten Seite ein Aufnahmeabschnitt 8 an, in dem eine Werkzeugaufnahme 10 für ein Drehwerkzeug (nicht dargestellt) ausgebildet ist. Dieser Aufnahmeabschnitt 8 ist gegenüber dem ersten Hakenabschnitt 11 durch Kaltumformen in seinem Querschnitt verändert, derart, dass er eine Breite 13 aufweist, die größer als der erste Durchmesser 12 ist, und eine Tiefe 14, die kleiner als der erste Durchmesser 12 ist. Die Breite 13 erstreckt sich senkrecht zur Längsachse 4 und parallel zum Querschnitt des Aufnahmeabschnitts 8, die Tiefe 14 dagegen in Richtung der Längsachse 4. Die Breite 13 und die Tiefe 14 spannen mit der Längsachse 4 eine zweite Axialebene 26 auf, die senkrecht zur ersten Axialebene 25 verläuft (Figur 3). Zudem weist der Aufnahmeabschnitt 8 eine Länge 15 auf, die größer als seine Breite 13 ist. Die Länge 15 des Aufnahmeabschnitts 8 verläuft in der ersten Axialebene 25 und somit senkrecht zur zweiten Axialebene 26.

Der Aufnahmeabschnitt 8 beginnt dort, wo der kreisrunde Querschnitt des ersten Hakenabschnitts 11 von der Kreisform abweicht und endet am Übergang zu einem zweiten Hakenabschnitt 20, der wiederum einen kreisrunden Querschnitt aufweist, dessen Durchmesser wieder dem ersten Durchmesser 12 entspricht. Dieser zweite Hakenabschnitt 20 ist ebenfalls gekrümmt in die gleiche Richtung wie der erste Hakenabschnitt 11 und weist im Wesentlichen die gleiche Krümmung wie der erste Hakenabschnitt 11 auf. Ein freies Ende 22 des zweiten Hakenabschnitts 20 weist einen Abstand 21 zum Schaftabschnitt 3 auf, der größer als der erste Durchmesser 12 ist. Vorliegend ist der Kopfabschnitt 2 der Hakenschraube 1 als offener Rundhaken über circa 270° geschlossen und über circa 90° offen.

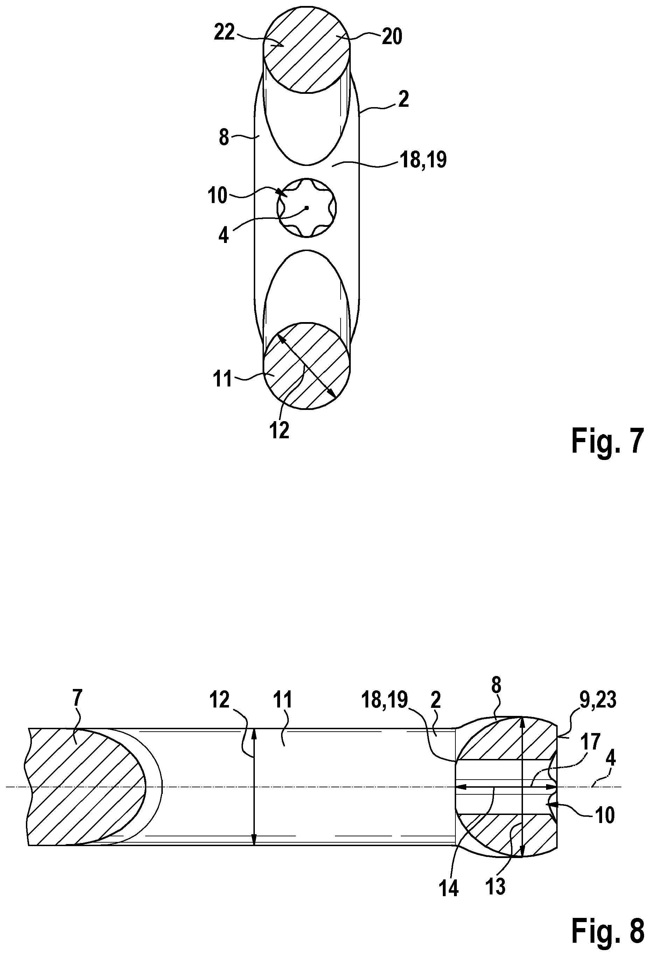

Der Aufnahmeabschnitt 8 weist eine ebene Aufnahmefläche 9 auf, die auf einer dem Schaftabschnitt 3 abgewandten Seite des Aufnahmeabschnitts 8 ausgebildet ist und die das hintere Ende 23 der Hakenschraube 1 bildet. Die Längsachse 4 bildet zu der Aufnahmefläche 9 eine Flächennormale. Mittig in der Aufnahmefläche 9 und konzentrisch zur Längsachse 4 ist im Aufnahmeabschnitt 8 die Werkzeugaufnahme 10 ausgebildet, die den Aufnahmeabschnitt 8 in seiner Tiefe, also in Richtung der Längsachse 4, vollständig durchdringt (Figuren 7 und 8). Eine Aufnahmeachse 17 der Werkzeugaufnahme 10 verläuft auf der Längsachse 4. Die Werkzeugaufnahme 10 selbst ist sternförmig als Innenmehrkant ausgebildet. Der Innenmehrkant ist drehsymmetrisch zur Längsachse 4 und so orientiert, dass die als Strahlen des Sterns ausgebildeten Nuten 16 nicht in der zweiten Axialebene 26 verlaufen, sondern in einem Winkel dazu, sich also unter einem Winkel zur Breite 13 erstrecken. Wie in Figur 4 zu sehen ist, führt dies dazu, dass die dünnste Materialdicke um die Werkzeugaufnahme 10 nicht in der zweiten Axialebene liegt, so dass die Werkzeugaufnahme 10 stabil ausgebildet ist. Die Innenseite 18 des Aufnahmeabschnitts 8, die dem Schaftabschnitt 3 zugewandt ist, und welche die Werkzeugaufnahme 10 ebenfalls durchdringt, bildet eine Innenebene 19, zu der die Längsachse 4 ebenfalls eine Flächennormale bildet. Diese Innenebene 19 dient beim Einbringen der Werkzeugaufnahme 10 in den Aufnahmeabschnitt 8 ein Widerlager für das Werkzeug, was die Herstellung vereinfacht.

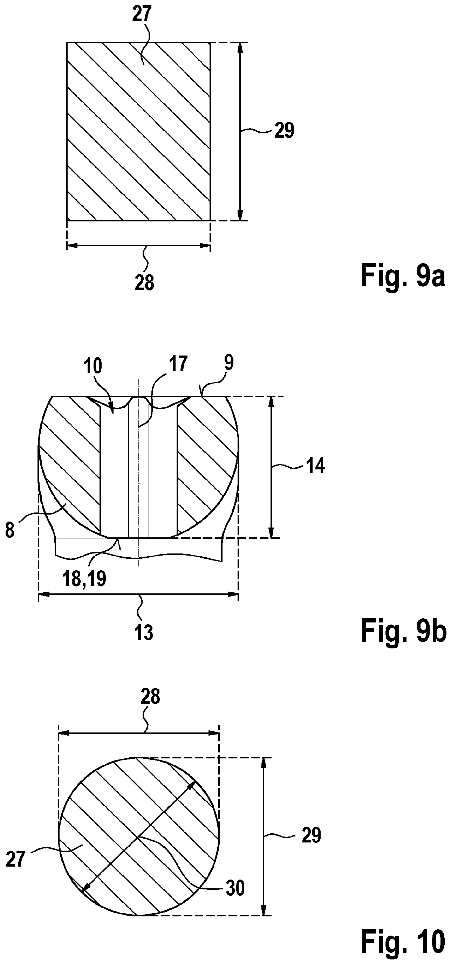

In den Figuren 9 und 10 sind jeweils zwei Querschnitte des Bereichs dargestellt, in dem der Aufnahmeabschnitt 8 ausgebildet wird oder ist. In Figur 9 a) ist das Ausgangsstück 27 ein Stahldraht mit rechteckigem Querschnitt, der eine Ausgangsbreite 28 und eine Ausgangstiefe 29 aufweist. Durch Kaltmassivumformen erhält der Querschnitt die in Figur 9 b) dargestellte Form, mit einer Breite 13, die größer als die Ausgangsbreite 28 ist und einer Tiefe 14, die kleiner als die Ausgangstiefe 29 ist. Zudem werden die ebene Aufnahmefläche 9 und die ebene Innenseite 18 ausgebildet, durch die hindurch im nächsten Schritt, der aber auch bereits mit dem Umformen des Querschnitts erfolgen kann, die Werkzeugaufnahme 10 über die ganze Tiefe 14 des Querschnitts ausgeformt wurde. Abweichend hiervon kann auch als Ausgangsstück 27 ein Stahldraht mit kreisförmigem Querschnitt verwendet werden, wie dies in Figur 10 dargestellt ist. Der Stahldraht weist vor dem Umformen einen Drahtdurchmesser 30 auf, der kleiner als die Breite 13 des Aufnahmeabschnitts 8 nach dem Umformen und größer als die Tiefe 14 des Aufnahmeabschnitts 8 ist.

### Bezugszeichenliste

### Hakenschraube und Verfahren zur Herstellung einer Hakenschraube

- 1: Hakenschraube
- 2: Kopfabschnitt
- 3: Schaftabschnitt
- 4: Längsachse
- 5: vorderes Ende des Schaftabschnitts 3
- 6: Außengewinde
- 7: Biegestelle
- 8: Aufnahmeabschnitt
- 9: Aufnahmefläche
- 10: Werkzeugaufnahme
- 11: erster Hakenabschnitt
- 12: erster Durchmesser
- 13: Breite des Aufnahmeabschnitts 8
- 14: Tiefe des Aufnahmeabschnitts 8
- 15: Länge des Aufnahmeabschnitts 8
- 16: Nut
- 17: Aufnahmeachse
- 18: Innenseite
- 19: Innenebene
- 20: zweiter Hakenabschnitt
- 21: Abstand
- 22: freies Ende des zweiten Hakenabschnitts 20
- 23: hinteres Ende der Hakenschraube 1
- 24: Spitze der Hakenschraube 1
- 25: erste Axialebene
- 26: zweite Axialebene
- 27: Ausgangsstück
- 28: Breite des Ausgangsstücks 27
- 29: Tiefe des Ausgangsstücks 27
- 30: Drahtdurchmesser

## Patentansprüche

1. Hakenschraube (1) mit einem als Haken ausgeformten Kopfabschnitt (2) und einem Schaftabschnitt (3),
wobei der Schaftabschnitt (3) gerade ist, sich entlang einer Längsachse (4) erstreckt, und an seinem vorderen Ende (5) ein Außengewinde (6) zum Einschrauben in einen Gegenstand aufweist,
wobei der Schaftabschnitt (3) an einer Biegestelle (7) in den Kopfabschnitt (2) übergeht,
wobei der Kopfabschnitt (2) einen Aufnahmeabschnitt (8) mit einer Werkzeugaufnahme (10) für ein Drehwerkzeug aufweist,
**dadurch gekennzeichnet,**
**dass** der Aufnahmeabschnitt (8) in einem Querschnitt, in dem die Werkzeugaufnahme (10) angeordnet ist, eine sich senkrecht zur Längsachse (4) erstreckende Breite (13) aufweist, die größer als eine sich in Richtung der Längsachse (4) erstreckende Tiefe (14) des Querschnitts ist.

2. Hakenschraube (1) nach Anspruch 1, **dadurch gekennzeichnet, dass** zwischen dem Aufnahmeabschnitt (8) und dem Schaftabschnitt (3) ein erster Hakenabschnitt (11) angeordnet ist, der einen im Wesentlichen kreisrunden Querschnitt mit einem ersten Durchmesser (12) aufweist und dass die Breite (13) größer als der erste Durchmesser (12) ist und dass die Tiefe (14) kleiner als der erste Durchmesser (12) ist.

3. Hakenschraube (1) nach Anspruch 1 oder 2, **dadurch gekennzeichnet, dass** der Aufnahmeabschnitt (8) eine Länge (15) aufweist, die größer als seine Breite (13) ist.

4. Hakenschraube (1) nach Anspruch 1 oder 3, **dadurch gekennzeichnet, dass** der Aufnahmeabschnitt (8) eine ebene Aufnahmefläche (9) aufweist, die auf einer dem Schaftabschnitt (3) abgewandten Seite des Aufnahmeabschnitts (8) ausgebildet ist.

5. Hakenschraube (1) nach einem der Ansprüche 1 bis 4, **dadurch gekennzeichnet, dass** die Werkzeugaufnahme (10) konzentrisch zur Längsachse (4) ist.

6. Hakenschraube (1) nach einem der Ansprüche 1 bis 5, **dadurch gekennzeichnet, dass** die die Werkzeugaufnahme (10) drehsymmetrisch zur Längsachse (4) ist.

7. Hakenschraube (1) nach einem der Ansprüche 1 bis 6, **dadurch gekennzeichnet, dass** die Werkzeugaufnahme (10) den Aufnahmeabschnitt (8) in der Tiefe (14) vollständig durchdringt.

8. Hakenschraube (1) nach einem der Ansprüche 1 bis 7, **dadurch gekennzeichnet, dass** die Werkzeugaufnahme (10) eine Nut (16) aufweist, die sich radial zu einer mittig in der Werkzeugaufnahme (10) liegenden Aufnahmeachse (17) nach außen unter einem Winkel zur Breite (13) erstreckt.

9. Hakenschraube (1) nach einem der Ansprüche 1 bis 8, **dadurch gekennzeichnet, dass** der Aufnahmeabschnitt (8) eine dem Schaftabschnitt (3) zugewandte Innenseite (18) aufweist, die eine Innenebene (19) bildet, zu der die Längsachse (4) eine Flächennormale bildet.

10. Hakenschraube (1) nach einem der Ansprüche 1 bis 9, **dadurch gekennzeichnet, dass** sich an den Aufnahmeabschnitt (8) an seinem dem ersten Hakenabschnitt (11) abgewandten Ende ein zweiter Hakenabschnitt (20) anschließt, der in die gleiche Richtung gekrümmt ist, insbesondere die gleiche Krümmung aufweist, wie der erste Hakenabschnitt (11) und dass der Abstand (21) eines freien Endes (22) des zweiten Hakenabschnitts (20) zum Schaftabschnitt (3) größer als der Durchmesser (12) des ersten Hakenabschnitts (11) ist.

11. Hakenschraube (1) nach einem der Ansprüche 1 bis 9, **dadurch gekennzeichnet, dass** sich an den Aufnahmeabschnitt (8), an seinem dem ersten Hakenabschnitt (11) abgewandten Ende (5), ein zweiter Hakenabschnitt (20) anschließt, der in die gleiche Richtung gekrümmt ist, insbesondere die gleiche Krümmung aufweist, wie der erste Hakenabschnitt (11) und dass der Abstand (21) eines freien Endes (22) des zweiten Hakenabschnitts (22) zum Schaftabschnitt (3) kleiner als der Durchmesser (12) des ersten Hakenabschnitts (11) ist.

12. Verfahren zur Herstellung einer Hakenschraube (1), insbesondere einer Hakenschraube (1) nach einem der Ansprüche 1 bis 11, die einen Schaftabschnitt (3) mit einem Außengewinde (6) und einen als Haken ausgeformten Kopfabschnitt (2) umfasst, wobei der Kopfabschnitt (2) eine Werkzeugaufnahme (10) aufweist, die in einem Querschnitt eines Aufnahmeabschnitts (8) angeordnet ist, dessen Breite (13) größer als dessen Tiefe (14) ist, **dadurch gekennzeichnet, dass** die Hakenschraube (1) durch Umformen aus einem Ausgangsstücks (27) hergestellt wird, dessen Ausgangsbreite (28) in einem Querschnitt, in dem die Werkzeugaufnahme (10) angeordnet wird, vor dem Umformen kleiner ist, als die Breite (13) des Querschnitts nach dem Umformen, bei dem der Aufnahmeabschnitt (8) geformt wird.

13. Verfahren nach Anspruch 12, **dadurch gekennzeichnet, dass** das Ausgangsstücks (27) in dem Bereich, in dem die Werkezugaufnahme angeordnet wird, vor dem Umformen eine Ausgangstiefe (29) aufweist, die größer ist als die Tiefe (14) des Querschnitts nach dem Umformen.

14. Verfahren nach einem der Ansprüche 12 oder 13, **dadurch gekennzeichnet, dass** das Ausgangsstück (27) ein Draht ist, dessen Ausgangsbreite (28) und Ausgangstiefe (29) gleich dem Drahtdurchmesser (30) in dem Querschnitt ist, in dem der Aufnahmeabschnitt (8) geformt wird.

15. Verfahren nach einem der Ansprüche 12 bis 14, **dadurch gekennzeichnet, dass** beim Umformen der Aufnahmeabschnitt (8) mit einer ebenen Aufnahmefläche (9) geformt wird.
